# FASCICULE DE BREVET EUROPEEN

(11) **EP 2 928 227 B1**
(45) Date de publication et mention de la délivrance du brevet: **16.01.2019**
(21) Numéro de dépôt: 15161881.6
(22) Date de dépôt: 31.03.2015
(51) Int. Cl.: H04W 16/28, H01Q 3/01, H01Q 3/20, H01Q 1/24, H04W 88/08

(54) **PROCÉDÉ DE CONFIGURATION ASSISTÉE PAR UN UTILISATEUR D'UNE STATION DE BASE RÉSIDENTIELLE, ET STATION DE BASE RÉSIDENTIELLE**
VERFAHREN ZUR ASSISTENTENGESTÜTZTEN KONFIGURATION DURCH EINEN NUTZER EINER BASISSTATION EINER HEIMTECHNIKANLAGE, UND ENTSPRECHENDE BASISSTATION EINER HEIMTECHNIKANLAGE
METHOD FOR USER-ASSISTED CONFIGURATION OF A HOME BASE STATION, AND HOME BASE STATION

(30) Priorité: 31.03.2014 FR 1452773
(43) Date de publication de la demande: 07.10.2015
(73) Titulaire: Orange, 75015 Paris (FR)
(72) Inventeur: EL AYOUBI, Salah, Eddine, 94270 LE KREMLIN-BICÊTRE (FR); SATHEESKUMAR VARMA, Vineeth, 75014 Paris (FR); DEBBAH, Merouane, 91140 VILLEBON-SUR-YVETTE (FR)
(74) Mandataire: Fontenelle, Sandrine

(56) Documents cités:
- EP-A1- 2 148 275
- WO-A2-2004/042938
- DE-U1- 20 218 408
- GB-A- 2 404 820
- US-A- 4 091 997
- US-A1- 2006 046 730
- US-A1- 2007 210 974

## Description

### Arrière-plan de l'invention

L'invention se rapporte au domaine général des télécommunications.

Elle concerne plus particulièrement l'utilisation de techniques de formation de faisceaux ou de voies de transmission ou « beamforming » en anglais, au niveau de stations de base ou de points d'accès destinés à couvrir des environnements intérieurs (« indoor » en anglais). Par souci de simplification, on désigne dans la suite de la description par « stations de base résidentielles » (ou HBS pour « home base station » en anglais) ces équipements. Il peut s'agir indifféremment d'un point d'accès WiFI (Wireless FIdelity), d'une station de base d'une cellule femto 3GPP (Third Group Partnership Project), etc.

Les techniques de beamforming sont utilisées classiquement dans les réseaux de télécommunications sans fil pour concentrer, lors d'une transmission entre un dispositif émetteur (ex. une station de base) et un dispositif récepteur (ex. un terminal), l'énergie rayonnée par les antennes de l'émetteur dans la direction du récepteur. De cette sorte, la puissance reçue par le récepteur est augmentée.

Cette concentration d'énergie est réalisée de manière électronique en appliquant des déphasages sur le signal émis par chaque antenne du dispositif émetteur de sorte que les signaux reçus au niveau des antennes du récepteur se combinent de façon cohérente. L'application de ces déphasages se traduit par une pondération complexe du signal en bande de base émis sur chaque antenne (aussi appelé pré-codage), permettant de créer un faisceau pointant dans la direction du dispositif récepteur. On note qu'avec les nouvelles technologies d'antennes actives, cette concentration d'énergie peut se faire aussi bien en deux dimensions (2D) qu'en trois dimensions (3D).

De plus amples détails sur les techniques de beamforming sont disponibles dans le document de L.C. Godora intitulé « Application of Antenna Arrays to Mobile Communications, Part II: Beam-forming and Direction-of-Arrival Considérations », Proceedings of the IEEE, vol. 85, n°8, Août 1997.

Le document US 2006/0046730 décrit un procédé permettant de séparer des réseaux sans fil virtuels au moyen de faisceaux de transmission différents utilisés pour servir des terminaux associés à ces différents réseaux.

Le document DE 202 18 408 décrit un procédé et un système utilisant du beamforming dynamique pour des signaux de communication sans fil dans un réseau sans fil.

Le document GB 2 404 820 décrit un système WLAN comprenant au moins un terminal dirigeant et contrôlant la puissance d'un faisceau de transmission en fonction de la position relative d'un autre terminal.

Le document EP 2 148 275 décrit une passerelle d'accès à un réseau de communication présentant une interface simple et conviviale par laquelle un utilisateur peut gérer les fonctions proposées par la passerelle.

En liaison descendante (i.e. transmission d'une station de base vers un terminal), un jeu de pondérations particulier est appliqué à chaque terminal. La sélection de ce jeu de pondérations requiert la connaissance par la station de base du canal de transmission observé par le terminal. Lorsque la réciprocité du canal entre la liaison montante et la liaison descendante ne peut être supposée (par exemple pour des transmissions selon un duplexage fréquentiel ou FDD (Frequency Division Duplex)), le terminal doit transmettre à la station de base une information dite de retour (ou « feedback » en anglais) sur l'état ou la qualité du canal aussi appelée CQI (Channel Quality Indicator). Cette information est estimée par le terminal à partir de signaux pilotes transmis par la station de base. Pour atteindre l'ensemble des terminaux localisés dans sa cellule et couvrir leurs déplacements, la station de base doit être configurée pour émettre des signaux pilotes de manière uniforme dans toutes les directions de l'espace (i.e. sur une couverture angulaire de 360°), chaque direction correspondant à la formation d'un faisceau (c'est-à-dire à l'application d'un jeu de pondérations particulier) au moyen de la technique de formation de faisceaux utilisée par la station de base.

Autrement dit, pour permettre à la station de base de sélectionner un jeu de pondérations approprié pour le terminal de sorte à créer un faisceau de transmission dans sa direction, le terminal doit être capable de mesurer et de reporter la qualité du canal reçue pour chaque faisceau.

Or, tous les terminaux ne sont pas nécessairement capables de réaliser de telles mesures (par exemple, pour des raisons d'évolution de la norme du réseau de télécommunications, certaines versions de la norme n'étant pas compatibles avec le fonctionnement décrit de la station de base). En outre, l'implémentation d'une telle méthode est particulièrement coûteuse en termes de signalisation.

### Objet et résumé de l'invention

L'invention permet notamment de pallier ces inconvénients dans un environnement de type indoor en proposant un procédé de configuration, assistée par un utilisateur, d'une station de base résidentielle d'un réseau de télécommunications, telle que décrite dans la revendication 1.

Corrélativement l'invention vise aussi une station de base résidentielle d'un réseau de télécommunications, apte à appliquer lors de communications sur ce réseau une technique de formation de faisceaux de transmission, conforme à la revendication 6. De plus, l'invention vise un programme d'ordinateur conforme à la revendication 9 et un support d'enregistrement conforme à la revendication 10.

Les inventeurs ont en effet constaté que les utilisateurs d'une station de base résidentielle se trouvent en général localisés dans une direction spécifique de l'espace par rapport à la station de base résidentielle, et que cette direction est peu amenée à évoluer avec le temps. Il en résulte qu'il est possible de déterminer aisément un faisceau optimal orienté dans cette direction et dont l'angle d'ouverture permet de couvrir au moins majoritairement la zone de présence, et que ce faisceau a, de façon avantageuse, rarement besoin d'être mis à jour.

L'invention s'appuie avantageusement sur ces constats en proposant une configuration semi-statique et assistée par un utilisateur de la station de base résidentielle à partir d'informations fournies par l'utilisateur et représentatives notamment de la direction dans laquelle sont susceptibles de se trouver les terminaux des utilisateurs de la station de base résidentielle, c'est-à-dire d'une zone géographique de présence préférentielle de ces terminaux.

Ces informations sont avantageusement fournies directement par l'utilisateur au moyen d'un module de saisie associé à la station de base résidentielle et qui peut être manipulé ou configuré par l'utilisateur. Ce module de saisie peut être prévu sur la station de base résidentielle ou être connecté à celle-ci par l'intermédiaire d'une connexion filaire ou sans fil (via par exemple un réseau de télécommunications). On note que ladite au moins une information fournie par l'utilisateur à l'aide de ce module de saisie peut comprendre, dans un mode particulier de réalisation, au moins un élément permettant de définir la zone de présence en trois dimensions.

Cette configuration assistée par utilisateur proposée par l'invention permet de simplifier la sélection du faisceau de transmission utilisé par la station de base résidentielle pour communiquer avec les terminaux qu'elle sert sur le réseau. Cette sélection ne requiert en effet aucune signalisation coûteuse sur le réseau de télécommunications, puisqu'elle peut être réalisée directement par la station de base résidentielle à partir de la zone de présence spécifiée par l'utilisateur : la spécification de cette zone de présence permet en effet à la station de base résidentielle de déduire la direction et l'ouverture du faisceau (2D ou 3D) qu'elle doit utiliser pour communiquer avec les terminaux sans requérir de retour de ces terminaux. La station de base peut ainsi se limiter à envoyer des signaux pilotes uniquement pour le faisceau sélectionné pour la zone de présence indiquée par l'utilisateur.

Conformément à l'invention, la station de base résidentielle sélectionne un unique faisceau pour couvrir majoritairement ou en totalité la zone de présence indiquée par l'utilisateur. Ceci permet de limiter la complexité liée à la mise en oeuvre de la technique de formation de faisceaux de transmission et la signalisation en découlant.

Par « couvrir au moins majoritairement la zone de présence », on entend ici que le faisceau de transmission associé par la station de base résidentielle à la zone de présence est choisi de sorte que celle-ci soit en mesure de servir l'ensemble des terminaux se trouvant dans cette zone de présence.

On notera qu'un faisceau de transmission créé en utilisant une technique de beamforming via la spécification d'un angle d'ouverture et d'une direction n'est jamais « parfait », autrement dit, n'est jamais constitué d'un seul lobe du fait notamment des imperfections de la technique de beamforming et des hypothèses faites sur les antennes de la station de base (ex. en termes de (dé)corrélation). La formation d'un faisceau selon une direction et un angle spécifiés se traduit en effet par la création d'un lobe dit principal qui s'accompagne de lobes secondaires. Ces lobes secondaires permettent d'assurer les communications des terminaux se trouvant dans la zone de présence même si ceux-ci sont en dehors de la couverture à proprement parler du lobe principal. La station de base résidentielle associe conformément à l'invention un faisceau principal qui permet de servir les terminaux se trouvant dans la zone de présence indiquée par l'utilisateur, éventuellement grâce aux lobes secondaires ainsi créés.

Dans un mode de réalisation non revendiqué, la station de base résidentielle peut sélectionner un nombre limité de faisceaux, supérieur à 1, pour couvrir majoritairement ou en totalité la zone de présence. Cette variante a une application privilégiée notamment lorsque lors de l'étape d'association, la station de base résidentielle considère un ensemble de faisceaux prédéterminés, et que la sélection de plusieurs faisceaux de cet ensemble s'avère pertinente et utile pour couvrir majoritairement la zone de présence.

L'invention permet ainsi avantageusement à tout type de terminal de pouvoir bénéficier d'un gain de beamforming. En effet, grâce à l'invention, un terminal peut bénéficier d'un gain de beamforming qu'il soit compatible ou non avec les techniques de beamforming adaptatif mises en oeuvre dans les systèmes de télécommunication normalisés (ex. norme LTE (Long Term Evolution)), et basées sur l'écoute et la mesure de plusieurs signaux pilotes émis dans toutes les directions de l'espace au moyen de faisceaux de transmission différents.

Il convient toutefois de noter que le procédé de configuration selon l'invention n'est pas incompatible avec l'utilisation d'une voie de retour entre les terminaux et la station de base résidentielle et l'écoute d'une pluralité de signaux pilotes émis en utilisant une pluralité de faisceaux de transmission.

L'invention permet en effet de sélectionner un faisceau principal ou primaire permettant de couvrir majoritairement au moins la zone de présence et l'ensemble des terminaux présents dans cette zone. Au moyen d'une technique de pré-codage appropriée, ce faisceau principal peut être divisé en plusieurs sous-faisceaux, et la voie de retour peut alors être utilisée pour choisir l'un de ces sous-faisceaux pour un terminal particulier. Une telle variante s'appuie toutefois sur l'utilisation de terminaux aptes à mesurer et à remonter des informations sur une pluralité de signaux pilotes émis par la station de base résidentielle selon chacun des sous-faisceaux constituant le faisceau principal (c'est-à-dire en plus du signal pilote émis sur le faisceau principal).

Par ailleurs, l'invention permet avantageusement de réduire la pollution électromagnétique et la consommation d'énergie grâce à la transmission d'un nombre limité de signaux pilotes dans la direction de la zone de présence indiquée par l'utilisateur.

Enfin l'invention, en orientant les faisceaux de transmission dans une direction spécifique, favorise la protection de la vie privée des utilisateurs de la station de base résidentielle par rapport à leur environnement (voisins, etc.).

Dans un mode particulier de réalisation de l'invention, la station de base résidentielle est configurée pour utiliser ledit faisceau de transmission associé à la zone de présence jusqu'à l'obtention d'une nouvelle information fournie par l'utilisateur conduisant à l'association d'un autre faisceau de transmission à une autre zone de présence.

Autrement dit, la station de base résidentielle est configurée pour utiliser les faisceaux permettant de couvrir la zone de présence préférentielle spécifiée par l'utilisateur tant que cette zone de présence n'est pas amenée à évoluer, c'est-à-dire tant que les terminaux servis par la station de base résidentielle restent dans cette zone. L'utilisateur peut toutefois aisément fournir une nouvelle zone de présence, ou être amené à faire agrandir ou réduire cette zone en cas de mobilité des terminaux.

L'utilisateur peut spécifier la zone de présence des terminaux destinés à communiquer avec la station de base résidentielle de différentes manières.

Le module de saisie peut être notamment positionné sur la station de base (et faire partie intégrante de celle-ci) et être destiné à être manipulé par l'utilisateur pour fournir les informations représentatives de la zone de présence.

Ainsi, selon une première variante :
- le module de saisie comprend deux bras articulés autour d'au moins un point fixe de la station de base résidentielle aptes à être positionnés par l'utilisateur de sorte à définir ladite zone de présence ; et
- le module d'obtention comprend le module de saisie et un module d'acquisition d'une position angulaire des deux bras articulés.

Corrélativement, dans cette première variante, l'étape d'obtention de l'information fournie par l'utilisateur comprend l'acquisition d'une position angulaire de deux bras articulés autour d'au moins un point fixe de la station de base résidentielle et positionnés par l'utilisateur de sorte à définir la zone de présence.

Autrement dit, la station de base résidentielle est, dans cette première variante, équipée d'une sorte de compas muni de deux bras articulés permettant à l'utilisateur de désigner la direction qui doit être couverte par la station de base résidentielle et la largeur de la couverture.

Cette première variante a une application privilégiée lorsque l'on considère des faisceaux de transmission 2D (i.e. pour lesquels l'adaptation est réalisée dans un plan horizontal).

Selon une deuxième variante, le dispositif de bras articulés est remplacé par un écran positionné sur la station de base et permettant à l'utilisateur de fournir ladite au moins une information représentative de la zone de présence.

Cet écran peut être notamment un écran tactile. L'utilisateur peut alors par exemple indiquer manuellement sur cet écran l'ouverture et la direction des faisceaux qu'il désire créer, à l'aide d'un pointeur ou d'un stylet ou encore en sélectionnant une combinaison de faisceaux pré-affichés.

Cet écran peut aussi proposer à l'utilisateur de planifier des faisceaux dans le sens vertical (« beamforming 3D »), par exemple pour d'autres étages situés au-dessus ou en dessous de la position de la station de base. Le cas échéant, l'écran permet à l'utilisateur de saisir une dimension verticale pour la zone de présence comme par exemple la hauteur de chaque étage à couvrir et/ou un choix de faisceaux dans le plan pour cet étage.

Selon une troisième variante non revendiquée, l'étape d'obtention comprend l'acquisition d'un ensemble de coordonnées géographiques (2D ou 3D) définissant la zone de présence et une position de la station de base dans un référentiel prédéterminé.

Corrélativement, dans cette troisième variante, le module d'obtention de la station de base résidentielle comprend un module d'acquisition d'un ensemble de coordonnées géographiques délimitant la zone de présence et de coordonnées géographiques définissant une position de la station de base dans un référentiel prédéterminé. Cet ensemble de coordonnées géographiques peut être fourni par l'utilisateur à la station de base résidentielle via par exemple un écran tel que décrit précédemment et prévu sur la station de base résidentielle ou via un outil de configuration prévu à cet effet et accessible par l'intermédiaire notamment d'un ordinateur relié à la station de base résidentielle. Selon cette dernière option, le module de saisie n'est plus sur la station de base à proprement parler mais est distant, et connecté par exemple à celle-ci par l'intermédiaire d'une liaison filaire ou sans fil. Cette option ne nécessite pas d'intervention manuelle directe de l'utilisateur sur la station de base résidentielle. L'accès à l'outil de configuration peut être facilement limité à des personnes autorisées uniquement pour des raisons de sécurité.

L'ensemble de coordonnées géographiques peut être spécifié par l'utilisateur notamment via une carte géographique fournie à la station de base résidentielle (par exemple dans un format ou une représentation interprétable par la station de base résidentielle), ou l'outil de configuration peut prévoir en variante une interface graphique permettant à l'utilisateur de dessiner la zone de présence et de représenter la position de la station de base résidentielle par rapport à celle-ci (le référentiel peut être un référentiel local selon cet exemple).

Dans un mode particulier de réalisation, au cours de l'étape d'association, ledit faisceau de transmission est sélectionné parmi un ensemble de faisceaux de transmission prédéterminés.

Ceci permet d'accélérer le choix par la station de base résidentielle du faisceau à associer à la zone de présence (i.e. à la direction) spécifiée par l'utilisateur.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations, ce programme étant susceptible d'être mis en oeuvre dans une station de base résidentielle ou plus généralement dans un ordinateur, ce programme comportant des instructions adaptées à la mise en oeuvre des étapes d'un procédé de configuration tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de configuration et la station de base résidentielle selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, de façon schématique, une station de base résidentielle conforme à l'invention dans un premier mode de réalisation ;
- les figures 2 et 3 illustrent des exemples de module d'obtention d'une information représentative d'une zone de présence des utilisateurs pouvant être incorporé dans la station de base résidentielle ;
- la figure 4 illustre l'architecture matérielle de la station de base résidentielle de la figure 1 ;
- la figure 5 représente, sous forme d'ordinogramme, les principales étapes d'un procédé de configuration selon l'invention telles qu'elles sont mises en oeuvre par la station de base résidentielle de la figure 1 ; et
- la figure 6 représente une station de base résidentielle conforme à l'invention dans un second mode de réalisation.

### Description détaillée de l'invention

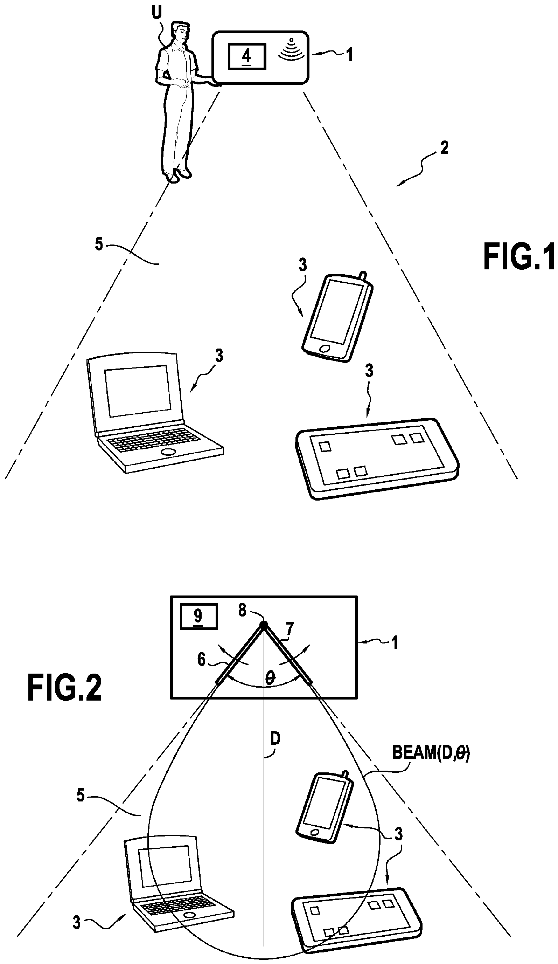

La **figure 1** représente, dans son environnement, une station de base résidentielle 1 d'un réseau de télécommunications NW conforme à l'invention, dans un premier mode de réalisation.

La station de base résidentielle 1 est positionnée dans un environnement dit indoor 2, tel que par exemple à l'intérieur d'un bâtiment, sur un campus, dans un appartement, etc., dans lequel se trouve au moins un terminal 3 apte à se connecter au réseau de télécommunications NW.

Aucune limitation n'est attachée au type de terminal 3 localisé dans l'environnement indoor 2 et pouvant se connecter au réseau de télécommunications NW par l'intermédiaire de la station de base résidentielle 1. Ainsi il peut s'agir d'un ordinateur fixe, d'un ordinateur portable, d'un terminal mobile, d'une tablette électronique, etc.

Par station de base résidentielle, on entend ici tout type de station de base ou de point d'accès à un réseau de télécommunications destiné(e) à couvrir un environnement de type indoor. Il peut ainsi s'agir indifféremment d'un point d'accès WiFI (Wireless FIdelity), d'une station de base d'une cellule femto 3GPP, etc.

On suppose ici que la station de base résidentielle 1 est apte à appliquer, lors de ses transmissions en voie descendante vers des terminaux connectés au réseau de télécommunications NW, une technique de formation de faisceaux de transmission ou beamforming. Une telle technique permet de créer de manière électronique un faisceau d'une ouverture (largeur) donnée pointant dans la direction du terminal à destination duquel la station de base émet dans lequel l'énergie rayonnée par ses antennes est concentrée. De telles techniques sont connues en soi et ne sont pas décrites en détail ici.

Comme souligné précédemment, les inventeurs ont constaté que dans un environnement indoor couvert par une station de base résidentielle tel que l'environnement 2, les utilisateurs de la station de base résidentielle et leurs terminaux sont souvent localisés dans une zone spécifique de l'environnement 2, variant assez peu au cours du temps. Partant de ce constat, les inventeurs ont eu l'idée judicieuse de fournir à la station de base résidentielle de façon très simple, i.e. par le biais de l'entremise d'un utilisateur, une information permettant à celle-ci d'identifier une zone de présence privilégiée dans laquelle sont susceptibles de se trouver les terminaux de sorte à diriger un faisceau de transmission en direction de cette zone grâce à la technique de beamforming. La station de base résidentielle est ainsi configurée pour émettre selon cette direction jusqu'à ce que l'utilisateur lui fournisse une information signalant un changement de la zone de présence et nécessitant un changement de direction du faisceau de transmission.

A cet effet, conformément à l'invention, la station de base résidentielle 1 est équipée d'un module 4 permettant à un utilisateur U de lui fournir une ou des informations représentatives d'une zone géographique 5 de l'environnement indoor 2 dans laquelle se trouvent ou sont susceptibles de se trouver les terminaux 3. En d'autres mots, ce module 4 permet à l'utilisateur U de choisir la direction dans laquelle orienter le faisceau de transmission créé par la technique de beamforming pour communiquer avec les terminaux 3, ainsi que la largeur de ce faisceau.

La zone géographique 5 est une zone de présence au sens de l'invention. Il s'agit d'une zone définissant un angle réduit par rapport à la couverture angulaire omnidirectionnelle « nominale » de la station de base résidentielle 1, c'est-à-dire qu'elle définit une direction angulaire privilégiée vers laquelle la station de base résidentielle 1 peut émettre et diriger un ou éventuellement plusieurs faisceaux de transmission par opposition à une configuration classique dans laquelle la station de base résidentielle doit émettre des signaux pilotes selon des faisceaux orientés vers toutes les directions. Cette zone géographique 5 est par ailleurs délimitée par les frontières « naturelles » de l'environnement indoor 2 considéré, tels que typiquement par les murs ou par d'autres obstacles délimitant l'environnement indoor 2.

A titre illustratif, dans l'exemple envisagé à la figure 1, la zone géographique 5 est par exemple fermée en bas par les murs de l'environnement indoor 2 (non représentés sur la figure).

Le module 4 peut être de différentes natures.

Dans le premier mode de réalisation décrit ici, le module 4 est un module matériel prévu sur la station de base résidentielle 1, et qui lui permet d'obtenir de l'utilisateur U, via une intervention manuelle de celui-ci, une information angulaire sur la zone de présence 5 par rapport à une direction de référence et déterminer une direction et une ouverture pour créer un faisceau de transmission.

La **figure 2** illustre un exemple d'un tel module. Selon cet exemple, le module 4 comprend deux bras articulés 6 et 7 autour d'un point fixe 8 de la station de base résidentielle 1, aptes à être positionnés par l'utilisateur U de sorte à définir la zone de présence 5 ou une zone englobant la zone de présence 5. Ainsi, par exemple les bras 6 et 7 peuvent être déplacés par l'utilisateur U autour d'un axe passant par le point fixe 8, à la façon d'un compas. Le positionnement des bras 6 et 7 par l'utilisateur U constitue une fourniture par l'utilisateur U à la station de base résidentielle 1 d'informations représentatives de la zone de présence 5 au sens de l'invention. Les deux bras 6 et 7 et le point fixe 8 forment ainsi un module de saisie associé à la station de base au sens de l'invention.

Le module 4 comprend également un module d'acquisition 9 d'une position angulaire des deux bras 6 et 7 par rapport à une position de référence (non représentée sur la figure). Un tel module est connu en soi et n'est pas décrit plus en détail ici. Il peut comprendre notamment un capteur de position des bras localisé au point fixe 8, etc.

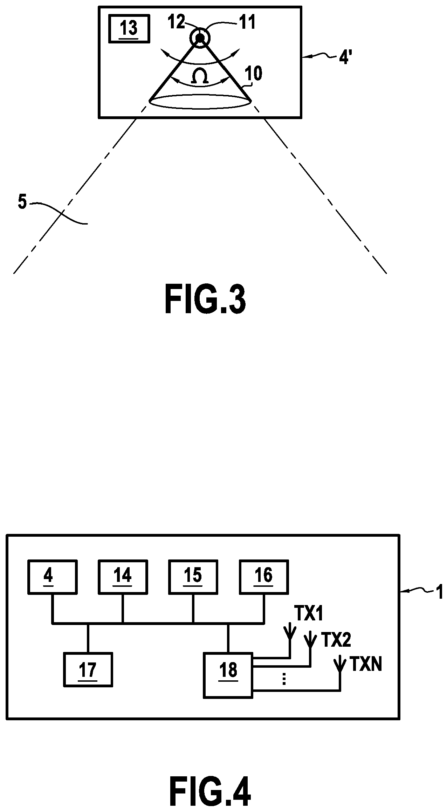

La **figure 3** illustre un autre exemple de module matériel 4' d'obtention d'une information fournie par l'utilisateur U représentative de la zone de présence 5. Selon cet exemple, le module matériel 4' comprend un cône 10 ayant un angle au sommet Ω prédéfini, et orientable par l'utilisateur U autour d'un axe 11 passant par un point fixe 12 de la station de base résidentielle 1. L'utilisateur U oriente ce cône en direction de la zone de présence 5. Le cône 10, l'axe 11 et le point fixe 12 forment ainsi un module de saisie associé à la station de base au sens de l'invention.

Le positionnement manuel du cône 10 par l'utilisateur U constitue une fourniture par l'utilisateur U à la station de base résidentielle 1 d'une information représentative de la zone de présence 5 au sens de l'invention.

Le module 4' comprend également un module d'acquisition 13 d'une position angulaire du cône par rapport à une position de référence (donnée par exemple par une mesure du déplacement angulaire du cône par rapport à une position initiale de ce dernier avant intervention de l'utilisateur U).

A partir des positions angulaires des bras 6 et 7 fournies par le module d'acquisition 9 ou de la position angulaire du cône 10 fournie par le module d'acquisition 13, la station de base résidentielle 1 peut identifier une ou un nombre limité de directions privilégiées vers laquelle ou lesquelles orienter un ou plusieurs faisceaux de transmission ainsi que l'ouverture de ces faisceaux, comme détaillé davantage ultérieurement.

Bien entendu, ces exemples ne sont pas limitatifs et d'autres types de module 4 peuvent être envisagés. En particulier, le module 4 peut être un module logiciel, et notamment un outil de configuration installé sur la station de base résidentielle 1, comme mentionné plus en détail ultérieurement en référence au deuxième mode de réalisation.

Par ailleurs, dans les exemples illustrés aux figures 2 et 3, une seule direction D et un seul angle d'ouverture peuvent être indiqués par l'utilisateur U au moyen des modules 4 et 4', autrement dit la zone de présence 5 spécifiée par l'utilisateur désigne une portion unique de l'espace dans laquelle sont susceptibles de se trouver les terminaux. En variante les modules 4 et 4' peut être équipés respectivement de plusieurs paires de bras articulés 6,7 ou de plusieurs cônes 10 permettant à l'utilisateur U de désigner plusieurs zones de présence disjointes.

La station de base résidentielle 1 a, dans le premier mode de réalisation décrit ici, l'architecture matérielle d'un ordinateur, telle qu'illustrée schématiquement à la **figure 4****.**

Elle comprend notamment, en plus du module matériel 4 d'obtention de l'information fournie par l'utilisateur U sur la zone de présence 5, un processeur 14, une mémoire morte 15, une mémoire vive 16, une mémoire non volatile 17, et des moyens de communication 18 sur le réseau de télécommunications mobiles NW lui permettant notamment de communiquer avec les terminaux 3. Ces moyens de communication 18 comprennent notamment une pluralité d'antennes de transmission TX1, TX2,.., TXN, N désignant un entier supérieur à 1, sur lesquelles la technique de beamforming s'appuie.

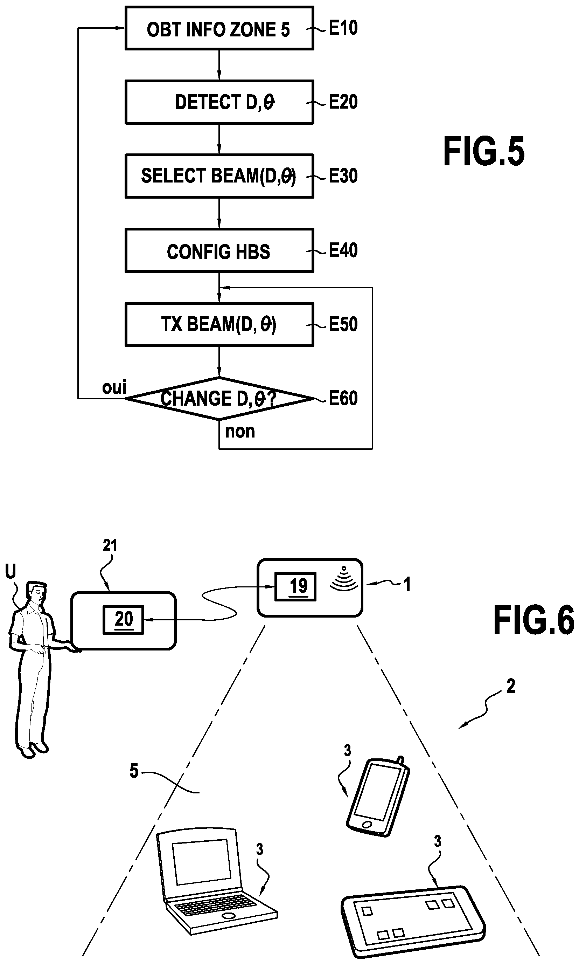

La mémoire morte 15 de la station de base résidentielle 1 constitue un support d'enregistrement lisible par le processeur 14 et sur lequel est enregistré un programme d'ordinateur conforme à l'invention, comportant des instructions pour l'exécution des étapes d'un procédé de configuration selon l'invention, les étapes de ce procédé étant décrites ultérieurement en référence à la figure 5 dans un mode particulier de réalisation.

Ce programme d'ordinateur définit de façon équivalente des modules fonctionnels de la station de base résidentielle 1 (modules logiciels ici), tels qu'un module d'association à la zone de présence 5 d'un ou plusieurs faisceaux de transmission permettant de couvrir cette zone majoritairement ou en totalité, et pouvant être formé(s) à l'aide de la technique de beamforming, et un module de configuration de la station de base résidentielle 1 pour qu'elle utilise au moins l'un de ces faisceaux pour communiquer vers les terminaux 3. Les fonctions de ces divers modules sont décrites plus en détail en référence aux étapes du procédé de configuration.

Nous allons maintenant décrire, en référence à la **figure 5****,** les principales étapes d'un procédé de configuration selon l'invention dans un mode particulier de réalisation dans lequel il est mis en oeuvre par la station de base résidentielle de la figure 1.

On suppose que l'utilisateur U indique manuellement, en déplaçant les bras articulés 6 et 7 du module matériel 4, la zone de présence 5 à la station de base résidentielle 1 et ainsi la direction angulaire dans laquelle elle doit être orienter le faisceau créé par la technique de beamforming (étape E10). L'utilisateur U positionne à cet effet les bras articulés 6 et 7 de sorte à délimiter (i.e. définir) la zone de présence 5 qu'il souhaite voir couverte par la station de base résidentielle 1. L'utilisateur U peut être indifféremment un utilisateur d'un des terminaux 3, un technicien ayant installé la station de base résidentielle 1, etc.

Les positions angulaires des deux bras articulés 6 et 7 par rapport à une position de référence prédéterminée sont alors détectées par le module d'acquisition 9 du module matériel 4, de façon connue en soi (étape E20). Ces positions angulaires définissent entre elles un angle ϑ. La station de base résidentielle 1 détermine à partir de ces positions angulaires une direction selon laquelle diriger un faisceau de transmission pour couvrir, majoritairement ou en totalité, la zone de présence 5, et l'ouverture requise pour ce faisceau, à l'aide de manipulations géométriques connues de l'homme du métier. Par exemple, la direction D choisie par la station de base résidentielle 1 correspond à la bissectrice de l'angle défini par les positions des bras articulés 6 et 7, et l'ouverture du faisceau est donnée par l'angle ϑ.

Dans le mode de réalisation décrit ici, la station de base résidentielle 1 associe alors à la direction D ainsi déterminée un unique faisceau de transmission BEAM(D,ϑ) pouvant être créé de façon connue en soi à l'aide de la technique de beamforming afin de couvrir, majoritairement ou en totalité, la zone de présence 5 (étape E30). La largeur (ouverture) du faisceau dépend de l'angle ϑ défini par les positions angulaires des bras articulés 6 et 7. La détermination d'un faisceau de transmission ayant une direction et une largeur données est connue de l'homme du métier et n'est pas décrite en détail ici. Ce faisceau de transmission est comme mentionné précédemment défini par un ensemble de poids complexes à appliquer sur le signal en bande de base émis sur chaque antenne TX1,...,TXN de la station de base résidentielle 1.

La figure 2 illustre un exemple d'un tel faisceau BEAM(D,ϑ) correspondant à la direction D et à l'angle ϑ définis par les positions angulaires des bras articulés 6 et 7 du module 4. Il convient de noter que sur la figure 2, la forme de ce faisceau ne couvre pas à proprement parler entièrement la zone de présence 5, mais majoritairement la zone de présence 5. Toutefois, de façon connue, la formation d'un faisceau selon une direction et un angle spécifiés à l'aide d'une technique de beamforming se traduit par la formation d'un lobe dit principal (correspondant au faisceau représenté sur la figure 2) accompagné de lobes secondaires (non représentés). Ce lobe principal et ces lobes secondaires permettent d'assurer les communications des terminaux se trouvant dans l'ensemble de la zone de présence 5 même si ceux-ci sont en dehors de la couverture à proprement parler du lobe « principal ». La station de base résidentielle associe donc conformément à l'invention en utilisant la direction D et l'angle ϑ délimitant la zone de présence 5, un faisceau qui permet de servir les terminaux se trouvant dans toute la zone de présence 5 indiquée par l'utilisateur, ceci éventuellement grâce aux lobes secondaires créés par la technique de beamforming. Au sens de l'invention, le faisceau BEAM(D,ϑ) ainsi choisi couvre au moins majoritairement la zone de présence indiquée par l'utilisateur U.

Le faisceau de transmission BEAM(D,ϑ) peut également être choisi parmi un ensemble de faisceaux de transmission prédéterminés ayant des directions et des ouvertures prédéterminées, aussi connu sous le nom de dictionnaire (ou « codebook » en anglais), et couvrant tout l'espace. Comme mentionné précédemment, chaque faisceau correspond à un ensemble de poids appliqués sur les signaux émis sur les différentes antennes de la station de base résidentielle 1. Un dictionnaire comprenant une pluralité de combinaisons prédéfinies de poids couvrant différentes directions de l'espace peut être utilisé. Un tel dictionnaire est connu de l'homme du métier et n'est pas détaillé davantage ici. La station de base résidentielle 1 choisit parmi ce dictionnaire la combinaison de poids qui permet, compte tenu de la direction D identifiée et de l'ouverture ϑ, de concentrer le plus d'énergie rayonnée par les antennes de la station de base résidentielle 1 dans cette direction et de couvrir, majoritairement ou en totalité, la zone de présence 5. Différents critères peuvent être considérés lors de ce choix (différence minimale entre la direction D et les directions des faisceaux du dictionnaire, prise en compte de l'ouverture ϑ, etc.).

La combinaison de poids choisie définit le faisceau BEAM(D,ϑ) associé à la direction D et à l'ouverture ϑ.

En variante, la station de base résidentielle 1 détermine plusieurs directions dans la zone de présence 5 et associe à chaque direction un faisceau de transmission du dictionnaire. Le nombre de directions déterminées par la station de base résidentielle 1 peut dépendre de la dimension de la zone de présence 5 (et corrélativement de l'angle ϑ défini par les bras 6 et 7), et de l'ouverture des faisceaux de transmission définis dans le dictionnaire.

La station de base résidentielle 1 est alors configurée pour utiliser le faisceau BEAM(D,ϑ) de transmission associé à la direction D et à l'ouverture ϑ lors de ses communications avec les terminaux 3 localisés dans la zone de présence 5 (étape E40). Conformément à cette configuration, elle envoie un signal pilote aux terminaux se trouvant dans la zone de présence 5 sur le faisceau BEAM(D,ϑ) et utilise ce faisceau pour communiquer avec ces terminaux (étape E50). Ce signal pilote permet à chaque terminal de la zone de présence 5 de s'assurer qu'il existe une station de base active dans cette zone dont il reçoit correctement les signaux et avec laquelle il peut communiquer pour accéder au réseau NW.

Cette configuration est maintenue tant que la station de base résidentielle 1 n'obtient pas de l'utilisateur U, via son module 4, de nouvelle(s) information(s) relatives à une modification de la zone de présence 5 et conduisant à l'association d'un autre faisceau de transmission que le faisceau BEAM(D,ϑ) pour servir les terminaux 3, autrement dit d'une information concernant notamment un changement de la direction D et/ou un changement de l'angle de couverture de la zone de présence 5 remontée par l'utilisateur U via le module 4 (étape test E60).

Il convient de noter que le procédé de configuration selon l'invention qui vient d'être décrit peut être complété par l'utilisation d'une voie de retour entre les terminaux 3 et la station de base résidentielle 1, comme décrit précédemment. Cette voie de retour peut permettre aux terminaux 3 de transmettre une estimation de la qualité reçue sur chaque sous-faisceau d'un faisceau de transmission « principal » ou « primaire » associé conformément à l'invention à la zone de présence 5 définie par l'utilisateur, afin d'affiner le choix d'un sous-faisceau pour un terminal particulier de la zone de présence 5. En d'autres mots, l'invention permet de sélectionner un faisceau principal permettant de couvrir en totalité ou au moins majoritairement la zone de présence 5, tandis que l'utilisation de la voie de retour permet de sélectionner un sous-faisceau dérivé de ce faisceau principal et adapté à un terminal particulier.

Dans le premier mode de réalisation décrit en référence aux figures 1 à 5, le module 4 d'obtention de l'information fournie par l'utilisateur U représentative de la zone de présence 5 des terminaux et de la direction D vers laquelle orienter le faisceau créé par la technique de beamforming est un module matériel localisé sur la station de base résidentielle et qui peut être manipulé manuellement par l'utilisateur U.

D'autres types de modules prévus sur la station de base résidentielle peuvent être envisagés. Ainsi notamment, le module d'obtention de l'information représentative de la zone de présence 5 peut comprendre un écran (module de saisie au sens de l'invention), typiquement un écran tactile, sur lequel l'utilisateur peut à l'aide d'un stylet ou d'un pointeur indiquer la direction et l'ouverture du faisceau à partir d'un point fixe représentant la station de base résidentielle de sorte à définir la zone de présence.

En variante, l'utilisateur peut dessiner sur cet écran tactile (à l'aide d'un stylet ou d'un pointeur) la zone de présence 5 dans un référentiel prédéterminé représenté sur l'écran et à partir d'une position de la station de base (modélisé par exemple par un point fixe sur l'écran), ou il peut saisir des dimensions permettant de définir la zone de présence 5 à partir de la position de la station de base. Le dessin ou les dimensions saisis par l'utilisateur sur l'écran tactile définissent un ensemble de coordonnées géographiques définissant la zone de présence et une position de la station de base dans le référentiel. La station de base résidentielle 1 peut alors, par des manipulations géométriques, déterminer la direction D, l'ouverture ϑ et le faisceau BEAM(D,ϑ) associé à cette direction et à cette ouverture permettant de couvrir, majoritairement ou en totalité, la zone de présence 5 définie par l'utilisateur via l'écran tactile.

Dans un second mode de réalisation non revendiqué de l'invention illustré à la **figure 6****,** le module d'obtention de l'information fournie par l'utilisateur U représentative de la zone de présence 5 est une interface logicielle 19 qui communique avec un outil de configuration 20 installé par exemple sur un serveur 21 accessible via un réseau de télécommunications tel que le réseau public Internet, ou sur un ordinateur accessible par l'utilisateur U.

Dans ce second mode de réalisation, l'information fournie par l'utilisateur U à la station de base résidentielle 1 par l'intermédiaire de l'outil de configuration 20 (module de saisie au sens de l'invention) est un ensemble de coordonnées géographiques définissant la zone de présence 5 et une position de la station de base résidentielle 1 dans un référentiel prédéterminé. Cet ensemble de coordonnées géographiques peut revêtir par exemple la forme d'une carte géographique de la zone de présence 5 à couvrir par le faisceau, envoyée à la station de base résidentielle 1 dans un format prédéterminé, interprétable par l'interface logicielle 19. A partir de cette carte et de la position de la station de base résidentielle 1 sur la carte, la station de base résidentielle 1 peut, par des manipulations géométriques, déterminer la direction D, l'ouverture ϑ et le faisceau BEAM(D,ϑ) associé à cette direction et à cette ouverture permettant de couvrir, majoritairement ou en totalité, la zone de présence 5. Les étapes E20 à E60 précédemment décrites en référence à la figure 5 et au premier mode de réalisation restent inchangées.

Dans une variante de réalisation, l'outil de configuration 20 peut comprendre un écran (tactile ou non) et proposer à l'utilisateur U une interface graphique lui permettant de dessiner la zone de présence 5 et d'indiquer la position de la station de base résidentielle 1 sur ce dessin. Ce dessin (ou cette carte ainsi réalisée) permet à l'outil de configuration 20 d'extraire des coordonnées géographiques définissant la zone de présence 5 et la position de la station de base résidentielle 1 dans un référentiel local, ce qui permet à la station de base résidentielle 1 de déterminer à partir de ces coordonnées la direction D vers laquelle orienter le faisceau créé par la technique de beamforming, ainsi que son ouverture ϑ.
En variante, le dessin ou la carte tel(le) qu'il(elle) est saisi(e) par l'utilisateur sur l'écran de l'outil de configuration 20 peut être transmis(e) par celui-ci dans un format prédéterminé à la station de base résidentielle 1, ce format étant interprétable par l'interface logicielle 19.

Il convient de noter que lorsque la station résidentielle 1 est associée à un module de saisie permettant à l'utilisateur de dessiner la zone de présence 5 ou de définir ses dimensions par rapport à un référentiel prédéterminé, ce module peut être configuré de sorte à permettre à l'utilisateur de définir cette zone de présence en trois dimensions, et en particulier de spécifier une dimension verticale pour la formation de faisceau.

Cette variante a un intérêt notamment lorsque la station résidentielle 1 est destinée à couvrir plusieurs étages d'un même lieu. La dimension verticale peut alors être spécifiée par exemple via une information fournissant la hauteur de l'étage où se trouve la station de base résidentielle 1, ou de l'étage en-dessous, etc. La zone de présence peut en outre dans cet exemple être composée d'une pluralité de zones de présence spécifiées par l'utilisateur pour chaque étage considéré.

Dans ce cas, la station de base résidentielle 1 est apte mettre en oeuvre une technique de formation de faisceaux de transmission en 3D, et à associer à la zone de présence ainsi définie en 3D au moins un faisceau de transmission 3D permettant de la couvrir au moins majoritairement. De telles techniques sont connues en soi et ne sont pas décrites plus en détail ici. Elles combinent l'adaptation de faisceau dans le plan horizontal (à laquelle il est fait référence précédemment dans les modes de réalisation décrits) avec une adaptation du faisceau dans la dimension verticale.

## Revendications

1. Procédé de configuration, assistée par un utilisateur (U), d'une station de base résidentielle (1) d'un réseau de télécommunications, cette station de base résidentielle étant apte à appliquer lors de communications sur le réseau une technique de formation de faisceaux de transmission, ce procédé de configuration comprenant :
- une étape d'obtention (E10) d'au moins une information fournie par l'utilisateur au moyen d'un module de saisie matériel prévu sur la station de base résidentielle, configuré ou manipulé manuellement par l'utilisateur pour spécifier ladite au moins une information et associé à la station de base résidentielle, ladite au moins une information étant représentative d'une zone de présence (5) dans laquelle sont susceptibles de se trouver des terminaux (3) aptes à communiquer avec la station de base résidentielle, ladite au moins une information comprenant une information angulaire sur ladite zone de présence par rapport à une direction de référence ;
- une étape d'association (E20, E30) à cette zone de présence, à partir de l'information fournie par l'utilisateur, d'un faisceau de transmission (BEAM(D,ϑ)) permettant de la couvrir au moins majoritairement et pouvant être formé à l'aide de ladite technique de formation de faisceaux de transmission, ladite étape comprenant la détermination à partir de l'information fournie par l'utilisateur d'une direction et d'un angle d'ouverture dudit faisceau de transmission pour couvrir majoritairement la zone de présence ;
- une étape de configuration (E40) de la station de base résidentielle pour qu'elle utilise (E50) ledit faisceau de transmission associé à la zone de présence lors d'une communication avec un terminal se trouvant dans cette zone de présence.

2. Procédé de configuration selon la revendication 1 dans lequel la station de base résidentielle est configurée pour utiliser ledit faisceau de transmission associé à la zone de présence jusqu'à l'obtention (E60) d'une nouvelle information fournie par l'utilisateur conduisant à l'association d'un autre faisceau de transmission à une autre zone de présence.

3. Procédé de configuration selon la revendication 1 ou 2 dans lequel l'étape d'obtention comprend l'acquisition d'une position angulaire de deux bras articulés (6,7) autour d'au moins un point fixe (8) de la station de base résidentielle et positionnés par l'utilisateur de sorte à définir ladite zone de présence.

4. Procédé de configuration selon l'une quelconque des revendications 1 à 3 dans lequel ladite au moins une information fournie par l'utilisateur comprend au moins un élément permettant de définir la zone de présence en trois dimensions.

5. Procédé de configuration selon l'une quelconque des revendications 1 à 4 dans lequel au cours de l'étape d'association, ledit faisceau de transmission est sélectionné parmi un ensemble de faisceaux de transmission prédéterminés.

6. Station de base résidentielle (1) d'un réseau de télécommunications, apte à appliquer lors de communications sur ce réseau une technique de formation de faisceaux de transmission, cette station de base résidentielle comprenant :
- un module d'obtention (4,4',20) d'au moins une information fournie par un utilisateur (U) au moyen d'un module de saisie matériel prévu sur la station de base résidentielle configuré ou manipulé manuellement par l'utilisateur pour spécifier ladite au moins une information et associé à la station de base résidentielle, ladite au moins une information étant représentative d'une zone de présence (5) dans laquelle sont susceptibles de se trouver des terminaux aptes à communiquer avec la station de base résidentielle, ladite au moins une information comprenant une information angulaire sur ladite zone de présence par rapport à une direction de référence ;
- un module d'association (14) à cette zone de présence, à partir de l'information fournie par l'utilisateur, d'un faisceau de transmission (BEAM(D,ϑ)) permettant de la couvrir au moins majoritairement et pouvant être formé à l'aide de ladite technique de formation de faisceaux de transmission, ladite station de base étant apte à partir de l'information fournie par l'utilisateur de déterminer une direction et un angle d'ouverture dudit faisceau de transmission pour couvrir majoritairement la zone de présence ;
- un module de configuration (14) apte à configurer la station de base résidentielle pour qu'elle utilise ledit faisceau de transmission associé à la zone de présence lors d'une communication avec un terminal se trouvant dans cette zone de présence.

7. Station de base résidentielle selon la revendication 6 dans laquelle le module de saisie comprend un écran permettant à l'utilisateur de saisir ladite au moins une information représentative de la zone de présence.

8. Station de base résidentielle (1) selon la revendication 6 dans laquelle :
- le module de saisie comprend deux bras articulés (6,7) autour d'au moins un point fixe (8) de la station de base résidentielle aptes à être positionnés par l'utilisateur de sorte à définir ladite zone de présence ; et
- le module d'obtention (4) comprend ledit module de saisie et un module d'acquisition (9) d'une position angulaire des deux bras articulés.

9. Programme d'ordinateur comportant des instructions pour l'exécution des étapes du procédé de configuration selon l'une quelconque des revendications 1 à 5 lorsque ledit programme est exécuté par un ordinateur.

10. Support d'enregistrement lisible par un ordinateur sur lequel est enregistré un programme d'ordinateur comprenant des instructions pour l'exécution des étapes du procédé de configuration selon l'une quelconque des revendications 1 à 5.

## Patentansprüche

1. Verfahren zur assistentengestützten Konfiguration durch einen Benutzer (U) einer Basisstation einer Heimtechnikanlage (1) eines Telekommunikationsnetzwerks, wobei dieses Basisstation einer Heimtechnikanlage geeignet ist, bei Kommunikationen in dem Netzwerk eine Technik zur Bildung von Übertragungsbündeln anzuwenden, wobei dieses Konfigurationsverfahren umfasst:
- einen Schritt des Erhalts (E10) mindestens einer Information, die vom Benutzer mit Hilfe eines materiellen Eingabemoduls geliefert wird, das an der Basisstation der Heimtechnikanlage vorgesehen ist, das manuell vom Benutzer konfiguriert oder manipuliert wird, um die mindestens eine Information zu spezifizieren, und das der Basisstation der Heimtechnikanlage zugeordnet ist, wobei die mindestens eine Information für eine Anwesenheitszone (5) repräsentativ ist, in der sich Endgeräte (3) befinden können, die geeignet sind, mit der Basisstation der Heimtechnikanlage zu kommunizieren, wobei die mindestens eine Information eine Winkelinformation in der Anwesenheitszone in Bezug zu einer Referenzrichtung umfasst;
- einen Schritt des Zuordnens (E20, E30) zu dieser Anwesenheitszone, auf Basis der vom Benutzer gelieferten Information, eines Übertragungsbündels (BEAM(D,ϑ)), das es ermöglicht, sie zumindest mehrheitlich abzudecken, und das mit Hilfe der Technik der Bildung von Übertragungsbündeln gebildet wird, wobei der Schritt die Bestimmung, auf Basis der von dem Benutzer gelieferten Information, einer Richtung und eines Öffnungswinkels des Übertragungsbündels umfasst, um die Anwesenheitszone mehrheitlich abzudecken;
- einen Schritt der Konfiguration (E40) der Basisstation der Heimtechnikanlage, so dass sie das Übertragungsbündel, das der Anwesenheitszone zugeordnet ist, bei einer Kommunikation mit einem Endgerät, das sich in dieser Anwesenheitszone befindet, verwendet (E50).

2. Konfigurationsverfahren nach Anspruch 1, bei dem die Basisstation der Heimtechnikanlage konfiguriert ist, um das der Anwesenheitszone zugeordnete Übertragungsbündel bis zum Erhalt (E60) einer Neuen Information, die vom Benutzer geliefert wird, die zur Zuordnung eines anderen Übertragungsbündels zu einer anderen Anwesenheitszone führt, zu verwenden.

3. Konfigurationsverfahren nach Anspruch 1 oder 2, bei dem der Schritt des Erhalts die Erfassung einer Winkelposition von zwei Gelenkarmen (6, 7) um mindestens einen Fixpunkt (8) der Basisstation der Heimtechnikanlage umfasst, die vom Benutzer positioniert wurden, um die Anwesenheitszone zu definieren.

4. Konfigurationsverfahren nach einem der Ansprüche 1 bis 3, bei dem die mindestens eine vom Benutzer gelieferte Information mindestens ein Element umfasst, das es ermöglicht, die Anwesenheitszone in drei Dimensionen zu definieren.

5. Konfigurationsverfahren nach einem der Ansprüche 1 bis 4, bei dem während des Zuordnungsschritts das Übertragungsbündel unter einer Gesamtheit von vorbestimmten Übertragungsbündeln ausgewählt wird.

6. Basisstation einer Heimtechnikanlage (1) eines Telekommunikationsnetzwerks, die geeignet ist, bei Kommunikationen in diesem Netzwerk eine Technik der Bildung von Übertragungsbündeln anzuwenden, wobei diese Basisstation einer Heimtechnikanlage umfasst:
- ein Modul zum Erhalt (4, 4', 20) mindestens einer Information, die von einem Benutzer (U) mit Hilfe eines materiellen Eingabemoduls geliefert wird, das an der Basisstation der Heimtechnikanlage vorgesehen ist, das manuell vom Benutzer konfiguriert oder manipuliert wird, um die mindestens eine Information zu spezifizieren, und das der Basisstation der Heimtechnikanlage zugeordnet ist, wobei die mindestens eine Information für eine Anwesenheitszone (5) repräsentativ ist, in der sich Endgeräte befinden können, die geeignet sind, mit der Basisstation der Heimtechnikanlage zu kommunizieren, wobei die mindestens eine Information eine Winkelinformation in der Anwesenheitszone in Bezug zu einer Referenzrichtung umfasst;
- ein Modul zum Zuordnen (14) zu dieser Anwesenheitszone, auf Basis der vom Benutzer gelieferten Information, eines Übertragungsbündels (BEAM(D,ϑ)), das es ermöglicht, sie zumindest mehrheitlich abzudecken, und das mit Hilfe der Technik der Bildung von Übertragungsbündeln gebildet werden kann, wobei die Basisstation geeignet ist, auf Basis der von dem Benutzer gelieferten Information, eine Richtung und einen Öffnungswinkels des Übertragungsbündels zu bestimmen, um die Anwesenheitszone mehrheitlich abzudecken;
- ein Modul zur Konfiguration (14) der Basisstation der Heimtechnikanlage, so dass sie das Übertragungsbündel, das der Anwesenheitszone zugeordnet ist, bei einer Kommunikation mit einem Endgerät, das sich in dieser Anwesenheitszone befindet, verwendet.

7. Basisstation einer Heimtechnikanlage nach Anspruch 6, bei der das Eingabemodul einen Bildschirm umfasst, der es dem Benutzer ermöglicht, die mindestens eine für die Anwesenheitszone repräsentative Information einzugeben.

8. Basisstation einer Heimtechnikanlage (1) nach Anspruch 6, bei der:
- das Eingabemodul zwei Gelenkarme (6, 7) um mindestens einen Fixpunkt (8) der Basisstation der Heimtechnikanlage umfasst, die geeignet sind, vom Benutzer derart positioniert zu werden, dass sie die Anwesenheitszone definieren; und
- das Modul zum Erhalt (4) das Eingabemodul und ein Erfassungsmodul (9) einer Winkelposition der zwei Gelenkarme umfasst.

9. Computerprogramm, umfassend Anweisungen für die Ausführung der Schritte des Konfigurationsverfahrens nach einem der Ansprüche 1 bis 5, wenn das Programm von einem Computer ausgeführt wird.

10. Aufzeichnungsträger, der von einem Computer lesbar ist, auf dem ein Computerprogramm aufgezeichnet ist, umfassend Anweisungen für die Ausführung der Schritte des Konfigurationsverfahrens nach einem der Ansprüche 1 bis 5.

## Claims

1. Method for configuring, with user (U) assistance, a home base station (1) of a telecommunications network, this home base station being capable of applying, during communications over the network, a transmission beamforming technique, this configuration method comprising:
- a step (E10) of obtaining at least one item of information provided by the user by means of a hardware input module fitted to the home base station, which input module is configured or operated manually by the user in order to specify said at least one item of information and associated with the home base station, said at least one item of information being representative of an area of presence (5) in which terminals (3) that are capable of communicating with the home base station are likely to be located, said at least one item of information comprising angular information on said area of presence with respect to a reference direction;
- a step (E20, E30) of associating, with this area of presence, on the basis of the information provided by the user, a transmission beam (BEAM (D, ϑ)) allowing said area to be at least mostly covered and being able to be formed using said transmission beamforming technique, said step comprising the operation of determining, on the basis of the information provided by the user, a direction and an angle of aperture of said transmission beam for the purpose of mostly covering the area of presence;
- a step (E40) of configuring the home base station so that it uses (E50) said transmission beam that is associated with the area of presence during a communication with a terminal located in this area of presence.

2. Configuration method according to Claim 1, wherein the home base station is configured to use said transmission beam that is associated with the area of presence until it obtains (E60) a new item of information provided by the user resulting in the association of another transmission beam with another area of presence.

3. Configuration method according to Claim 1 or 2, wherein the obtention step comprises the acquisition of an angular position of two articulated arms (6, 7) about at least one fixed point (8) of the home base station, which arms are positioned by the user so as to define said area of presence.

4. Configuration method according to any one of Claims 1 to 3, wherein said at least one item of information provided by the user comprises at least one element allowing the area of presence to be defined in three dimensions.

5. Configuration method according to any one of Claims 1 to 4, wherein, during the association step, said transmission beam is selected from a set of predetermined transmission beams.

6. Home base station (1) of a telecommunications network, capable of applying, during communications over the network, a transmission beamforming technique, this configuration method comprising:
- a module (4, 4', 20) for obtaining at least one item of information provided by the user (U) by means of a hardware input module fitted to the home base station, which input module is configured or operated manually by the user in order to specify said at least one item of information and associated with the home base station, said at least one item of information being representative of an area of presence (5) in which terminals that are capable of communicating with the home base station are likely to be located, said at least one item of information comprising angular information on said area of presence with respect to a reference direction;
- a module (14) for associating, with this area of presence, on the basis of the information provided by the user, a transmission beam (BEAM(D, ϑ)) allowing said area to be at least mostly covered and being able to be formed using said transmission beamforming technique, said base station being capable of determining, on the basis of the information provided by the user, a direction and an angle of aperture of said transmission beam for the purpose of mostly covering the area of presence;
- a configuration module (14) capable of configuring the home base station so that it uses said transmission beam that is associated with the area of presence during a communication with a terminal located in this area of presence.

7. Home base station according to Claim 6, wherein the input module comprises a screen allowing the user to input said at least one item of information that is representative of the area of presence.

8. Home base station (1) according to Claim 6, wherein:
- the input module comprises two articulated arms (6, 7) about at least one fixed point (8) of the home base station, which arms are capable of being positioned by the user so as to define said area of presence; and
- the obtention module (4) comprises said input module and a module (9) for acquiring an angular position of the two articulated arms.

9. Computer program including instructions for executing the steps of the configuration method according to any one of Claims 1 to 5 when said program is run by a computer.

10. Computer-readable recording medium on which a computer program comprising instructions for executing the steps of the configuration method according to any one of Claims 1 to 5 is recorded.
